# EUROPEAN PATENT APPLICATION

(11) **EP 4 815 157 A1**
(43) Date of publication of application: **30.09.2026**
(21) Application number: 24895482.8
(22) Date of filing: 27.05.2024
(51) Int. Cl.: H01M 50/342

(54) **CASING COMPONENT, BATTERY CELL, BATTERY AND ELECTRIC DEVICE**

(30) Priority: 28.11.2023 CN 202311621363
(71) Applicant: Contemporary Amperex Technology Co., Limited, Ningde, Fujian 352100 (CN)
(72) Inventor: WU, Kai, Ningde, Fujian 352100 (CN); ZHOU, Wenlin, Ningde, Fujian 352100 (CN); CHENG, Qi, Ningde, Fujian 352100 (CN); LI, Quankun, Ningde, Fujian 352100 (CN); WANG, Peng, Ningde, Fujian 352100 (CN)
(74) Representative: Gong, Jinping
(86) International application number: PCT/CN2024/095528
(87) International publication number: WO 2025/112372

(57) **Abstract**

A casing component (23), a battery cell (20), a battery (100), and an electric device are provided, where the casing component (23) is provided with a recess (231), a bottom wall of the recess (231) is provided with a score groove (232), in a circumferential direction of the recess (231), the score groove (232) extends along a closed trajectory, the score groove (232) includes a first groove segment (2321) and a second groove segment (2322), a sidewall of the recess (231) includes a first sidewall (2331) located outside the first groove segment (2321) and a second sidewall (2332) located outside the second groove segment (2322), and a maximum distance between the first groove segment (2321) and the first sidewall (2331) is greater than a maximum distance between the second groove segment (2322) and the second sidewall (2332). When the internal pressure of the battery cell (20) acts on the casing component (23), the force exerted on the first groove segment (2321) is less than the force exerted on the second groove segment (2322), thereby making the possibility of deformation of the region enclosed by the score groove (232) under force smaller and the possibility of premature cracking of the score groove (232) smaller, and thus extending the service life of the battery cell (20).

## Description

### CROSS-REFERENCE TO RELATED APPLICATIONS

The present application claims priority to the Chinese patent application CN202311621363.2, filed on November 28, 2023 and titled "CASING COMPONENT, BATTERY CELL, BATTERY, AND ELECTRIC DEVICE", which is incorporated herein by reference in its entirety.

### TECHNICAL FIELD

The present application relates to the technical field of batteries, and in particular, to a casing component, a battery cell, a battery, and an electric device.

### BACKGROUND

Energy conservation and emission reduction are key to the sustainable development of the automotive industry, and electric vehicles have become an important part of the sustainable development of the automotive industry owing to their advantages in energy conservation and environmental protection. For electric vehicles, battery technology is a crucial factor for their development.

In battery technologies, how to extend the service life of the battery is an urgent technical problem to be addressed.

### SUMMARY

Embodiments of the present application provide a casing component, a battery cell, a battery, and an electric device, which can reduce the possibility of premature cracking and pressure relief of the score groove in the casing component, thereby extending the service life of the battery.

According to a first aspect, the present application provides a casing component, applied to a battery cell, where the casing component is provided with a recess, a bottom wall of the recess is provided with a score groove, in a circumferential direction of the recess, the score groove extends along a closed trajectory, the score groove includes a first groove segment and a second groove segment, a sidewall of the recess includes a first sidewall located outside the first groove segment and a second sidewall located outside the second groove segment, and a maximum distance between the first groove segment and the first sidewall is greater than a maximum distance between the second groove segment and the second sidewall.

In the above technical solution, by providing a recess in the casing component and providing a score groove on the bottom wall of the recess, the score groove can be opened to perform pressure relief when the internal pressure of the battery cell reaches a threshold value, which can reduce the possibility of thermal runaway or even explosion occurred in the battery cell; by configuring the score groove extend along a closed trajectory in the circumferential direction of the recess, the score groove includes a first groove segment and a second groove segment, the sidewall of the recess includes a first sidewall located outside the first groove segment and a second sidewall located outside the second groove segment, and the maximum distance between the first groove segment and the first sidewall is greater than the maximum distance between the second groove segment and the second sidewall, when the internal pressure of the battery cell acts on the casing component, the force exerted on the first groove segment is less than the force exerted on the second groove segment, thereby making the possibility of deformation of the region enclosed by the score groove under force smaller and the possibility of premature cracking of the score groove smaller, and thus extending the service life of the battery cell.

According to some embodiments of the present application, from two ends of the first groove segment toward the middle, the distance between the first groove segment and the first sidewall gradually increases.

In the above technical solution, by configuring the distance between the first groove segment and the first sidewall to gradually increase from two ends of the first groove segment toward the middle, the extension of the first groove segment can be smooth, and stress concentration points are not easily formed, thereby reducing the possibility of premature cracking caused by stress concentration on the first groove segment and extending the service life of the battery cell.

According to some embodiments of the present application, the first sidewall is a plane surface, and the second sidewall is a curved surface.

In the above technical solution, by configuring the first sidewall as a plane surface, the length of the first sidewall can be set longer, making the area of the recess larger; by configuring the second sidewall as a curved surface, a larger area of the recess can be enclosed under the condition that the width of the recess is restricted, thereby making the area of the region enclosed by the score groove also larger. After the score groove is opened under force, a larger pressure relief channel can be formed, which facilitates rapid pressure relief of the battery cell and further reduces the possibility of thermal runaway or even explosion of the battery cell.

According to some embodiments of the present application, the recess further includes a third sidewall and a fourth sidewall, where the third sidewall is disposed opposite to the first sidewall along a first direction, the fourth sidewall is disposed opposite to the second sidewall along a second direction, and the first direction intersects the second direction.

In the above technical solution, the recess further includes a third sidewall and a fourth sidewall, where the third sidewall is disposed opposite to the first sidewall along a first direction, the fourth sidewall is disposed opposite to the second sidewall along a second direction. and the first direction intersects the second direction. This can make the distribution of the sidewalls of the recess more uniform and the force distribution on the bottom wall of the recess more uniform, so that stress concentration points are not easily formed on the score groove, which reduces the possibility of premature cracking caused by stress concentration on the score groove, and extends the service life of the battery cell.

According to some embodiments of the present application, the first direction is perpendicular to the second direction.

In the above technical solution, by configuring the first direction to be perpendicular to the second direction, the first sidewall and the third sidewall of the recess and the second sidewall and the fourth sidewall can be symmetrically arranged. This further makes the distribution of the sidewalls of the recess more uniform and the force distribution on the recess more uniform, so that stress concentration points are not easily formed on the score groove, which reduces the possibility of premature cracking caused by stress concentration on the score groove, and extends the service life of the battery cell.

According to some embodiments of the present application, along the first direction, a distance between the first sidewall and the third sidewall is W1, and a maximum distance between the first groove segment and the first sidewall is W2, satisfying 10% × W1 ≤ W2 ≤ 70% × W1.

In the above technical solution, by configuring the distance W1 between the first sidewall and the third sidewall along the first direction and the maximum distance W2 between the first groove segment and the first sidewall to satisfy 10% × W1 ≤ W2 ≤ 70% × W1, the fabrication of the score groove is facilitated, and the force exerted on the first groove segment from the inside of the battery cell is smaller, thereby making the possibility of deformation of the region enclosed by the score groove under force smaller, the improvement in deformation resistance more obvious, and the possibility of premature cracking of the score groove smaller, and thus extending the service life of the battery cell.

According to some embodiments of the present application, the score groove further includes a third groove segment, where the third groove segment is spaced apart from the first groove segment along the first direction, the second groove segment connects the first groove segment and the third groove segment, and a maximum distance between the third groove segment and the third sidewall is greater than a maximum distance between the second groove segment and the second sidewall.

In the above technical solution, by providing the third groove segment, and arranging the third groove segment to be spaced apart from the first groove segment along the first direction, with the second groove segment connecting the first groove segment and the third groove segment, and the maximum distance between the third groove segment and the third sidewall set to be greater than the maximum distance between the second groove segment and the second sidewall, when the internal pressure of the battery cell acts on the casing component, the force exerted on the third groove segment is less than the force exerted on the second groove segment. Moreover, due to the combined action of the first groove segment and the third groove segment, the possibility of deformation of the region enclosed by the score groove under force can be further lowered, the deformation resistance is stronger, the possibility of premature cracking of the score groove is smaller, and thus the service life of the battery cell can be extended.

According to some embodiments of the present application, the first groove segment and the third groove segment are symmetrically arranged relative to the center point of the recess.

In the above technical solution, by configuring the first groove segment and the third groove segment to be symmetrically arranged relative to the center point of the recess, the force exerted on the score groove can be more uniform, the possibility of deformation of the region enclosed by the score groove under force is smaller, the deformation resistance is stronger, the possibility of premature cracking of the score groove is smaller, and thus the service life of the battery cell can be extended.

According to some embodiments of the present application, the score groove further includes a fourth groove segment, where the fourth groove segment is spaced apart from the second groove segment along the second direction, the first groove segment, the second groove segment, the third groove segment, and the fourth groove segment are connected end to end to form a closed loop, and a maximum distance between the first groove segment and the first sidewall is greater than a maximum distance between the fourth groove segment and the fourth sidewall.

In the above technical solution, by providing the fourth groove segment, and arranging the fourth groove segment to be spaced apart from the second groove segment along the second direction, the distribution of the score groove can be more uniform, the possibility of the formation of stress concentration points on the score groove is smaller, and the possibility of premature cracking of the score groove is smaller, thereby extending the service life of the battery cell. The first groove segment, the second groove segment, the third groove segment, and the fourth groove segment are connected end to end to form a closed loop, so that when thermal runaway occurs in the battery cell, the score groove can be opened, and the region enclosed by the score groove can be separated from other regions of the casing component to form a pressure relief channel with a larger area, which facilitates rapid pressure relief of the battery cell and further reduces the possibility of thermal runaway or even explosion of the battery cell. The maximum distance between the first groove segment and the first sidewall is greater than the maximum distance between the fourth groove segment and the fourth sidewall, so the force exerted on the first groove segment is less than the force exerted on the fourth groove segment, thereby making the possibility of deformation of the region enclosed by the score groove under force smaller.

According to some embodiments of the present application, the second groove segment and the fourth groove segment are symmetrically arranged relative to the center point of the recess.

In the above technical solution, by configuring the second groove segment and the fourth groove segment to be symmetrically arranged relative to the center point of the recess, the force exerted on the score groove can be more uniform, the possibility of deformation of the region enclosed by the score groove under force is smaller, the deformation resistance is stronger, the possibility of premature cracking of the score groove is smaller, and thus the service life of the battery cell can be extended.

According to some embodiments of the present application, depths of the first groove segment, the second groove segment, and the fourth groove segment are greater than a depth of the third groove segment.

In the above technical solution, by configuring the depths of the first groove segment, the second groove segment, and the fourth groove segment to be greater than the depth of the third groove segment, the first groove segment, the second groove segment, and the fourth groove segment can be opened under force prior to the second groove segment to form a pressure relief channel, and the region enclosed by the score groove in the casing component is kept connected to other regions, which reduces the possibility of damage caused by interference with other components after the region enclosed by the score groove is separated from other regions.

According to some embodiments of the present application, along the first direction, a distance between the first sidewall and the third sidewall is W1, a maximum distance between the first groove segment and the first sidewall is W2, and a maximum distance between the third groove segment and the third sidewall is W3, satisfying W2 + W3 < W1.

In the above technical solution, by configuring the distance W1 between the first sidewall and the third sidewall along the first direction, the maximum distance W2 between the first groove segment and the first sidewall, and the maximum distance W3 between the third groove segment and the third sidewall to satisfy W2 + W3 < W1, the first groove segment and the third groove segment are not connected, thereby mitigating the problem of stress concentration at the connection and easy cracking caused by the joint of the first groove segment and the third groove segment, making the possibility of premature cracking of the score groove smaller, and thus extending the service life of the battery cell.

According to some embodiments of the present application, the first groove segment and the second groove segment are both arc segments.

In the above technical solution, by configuring the first groove segment and the second groove segment to be both arc segments, the extension of the first groove segment and the second groove segment can be smooth, and stress concentration points are not easily formed, thereby reducing the possibility of premature cracking caused by stress concentration on the first groove segment and the second groove segment and extending the service life of the battery cell. Moreover, the second groove segment can enclose a larger area, so that after the score groove is opened under force, a larger pressure relief channel can be formed, which facilitates rapid pressure relief of the battery cell and further reduces the possibility of thermal runaway or even explosion of the battery cell.

According to some embodiments of the present application, an arc transition is provided between the first groove segment and the second groove segment.

In the above technical solution, by configuring an arc transition between the first groove segment and the second groove segment, the transition portion between the first groove segment and the second groove segment can be smooth, and stress concentration points are not easily formed, thereby reducing the possibility of premature cracking caused by stress concentration on the first groove segment and extending the service life of the battery cell.

According to some embodiments of the present application, the first groove segment includes a first sub-groove segment and a second sub-groove segment, where an included angle between a tangent to the first sub-groove segment and the first sidewall is α1, and an included angle between a tangent to the second sub-groove segment and the first sidewall is α2, satisfying 40° ≤ α1 ≤ 80°, 40° ≤ α2 ≤ 80°.

In the above technical solution, the first groove segment includes a first sub-groove segment and a second sub-groove segment. By configuring the included angle α1 between the tangent to the first sub-groove segment and the first sidewall and the included angle α2 between the tangent to the second sub-groove segment and the first sidewall to satisfy 40° ≤ α1 ≤ 80°, 40° ≤ α2 ≤ 80°, on one hand, the first groove segment can be further away from the first sidewall of the recess, so as to further reduce the pressure exerted on the first groove segment from the inside of the battery cell; on the other hand, the corner degree at the joint of the first sub-groove segment, the second sub-groove segment, and other groove segments can be reduced, thereby reducing the possibility of the formation of stress concentration points at the joints of the first sub-groove segment, the second sub-groove segment, and other groove segments, making the possibility of deformation of the region enclosed by the score groove under force smaller, the deformation resistance stronger, the possibility of premature cracking of the score groove smaller, and thus extending the service life of the battery cell.

According to some embodiments of the present application, a length of the second groove segment is L1, a length of the score groove is L, satisfying L1 ≥ 1/4 × L.

In the above technical solution, by configuring the length L1 of the second groove segment and the length L of the score groove to satisfy L1 ≥ 1/4 × L, the length of the second groove segment in the score groove that bears a greater force than the first groove segment can be longer, when the internal pressure of the battery cell reaches the threshold value, the second groove segment is easy to open for pressure relief, and the area of the pressure relief region formed by enclosing the score groove is larger, after the score groove is opened under force, a larger pressure relief channel can be formed, which facilitates rapid pressure relief of the battery cell and further reduces the possibility of thermal runaway or even explosion of the battery cell.

According to some embodiments of the present application, the casing component includes a body and a pressure relief member, where the body is provided with a through hole, and the pressure relief member covers the through hole to form the recess.

In the above technical solution, the casing component includes a body and a pressure relief member, where the body is provided with a through hole, and the pressure relief member covers the through hole to form the recess. The fabrication and assembly of the body and the pressure relief member are simple, which facilitates the formation of the recess.

According to a second aspect, the present application provides a battery cell, including the casing component as described above.

According to some embodiments of the present application, the battery cell includes a case and an end cap, where the case has an opening, the end cap closes the opening, and the casing component is the end cap or the case.

In the above technical solution, the casing component is the end cap or the case, which can achieve pressure relief when the internal pressure of the battery cell reaches the threshold value, so as to reduce the possibility of thermal runaway or even explosion of the battery cell. By providing the score groove on the end cap to form a pressure relief structure, the pressure relief structure has good stability and good long-term reliability.

According to a third aspect, the present application provides a battery, including the battery cell as described above.

According to a fourth aspect, the present application provides an electric device, including the battery as described above, where the battery is configured to provide electrical energy.

### BRIEF DESCRIPTION OF DRAWINGS

In order to more clearly illustrate the technical solutions of the embodiments of the present application, the accompanying drawings to be used in the embodiments of the present application will be briefly introduced below. It should be understood that the following drawings only illustrate some embodiments of the present application, and therefore should not be regarded as limiting the scope. For those of ordinary skill in the art, other related drawings can be obtained based on these drawings without creative effort.
FIG. 1 is a structural schematic diagram of a vehicle according to some embodiments of the present application;
FIG. 2 is an exploded structural schematic diagram of a battery according to some embodiments of the present application;
FIG. 3 is an exploded structural schematic diagram of a battery cell according to some embodiments of the present application;
FIG. 4 is a perspective structural schematic diagram of a casing component according to some embodiments of the present application;
FIG. 5 is a structural schematic diagram of one perspective of a casing component according to some embodiments of the present application;
FIG. 6 is a cross-sectional structural schematic diagram along A-A in FIG. 5 of the casing component;
FIG. 7 is a partial enlarged structural schematic diagram at B in FIG. 6 of the casing component;
FIG. 8 is a perspective schematic diagram of a partial structure of a casing component according to some embodiments of the present application;
FIG. 9 is a schematic diagram of one perspective of a partial structure of a casing component according to some embodiments of the present application;
FIG. 10 is a partial enlarged structural schematic diagram at C in FIG. 5 of the casing component; and
FIG. 11 is an exploded structural schematic diagram of a casing component according to some embodiments of the present application.

Reference signs: 1000: vehicle; 100: battery; 10: box; 11: first sub-box; 12: second sub-box; 20: battery cell; 21: casing; 211: end cap; 2111: electrode terminal; 212: case; 22: electrode assembly; 221: tab; 23: casing component; 23a: body; 23b: pressure relief member; 231: recess; 232: score groove; 2321: first groove segment; 2321a: first sub-groove segment; 2321b: second sub-groove segment; 2322: second groove segment; 2323: third groove segment; 2324: fourth groove segment; 2331: first sidewall; 2332: second sidewall; 2333: third sidewall; 2334: fourth sidewall; 234: through hole; 200: controller; 300: motor; X: first direction; Y: second direction; and Z: third direction.

### DESCRIPTION OF EMBODIMENTS

In order to make the objectives, technical solutions, and advantages of the embodiments of the present application clearer, the technical solutions in the embodiments of the present application will be clearly described below in combination with the drawings in the embodiments of the present application. Obviously, the described embodiments are some embodiments of the present application, but not all embodiments. Based on the embodiments in the present application, all other embodiments obtained by those of ordinary skill in the art without creative effort belong to the protection scope of the present application.

Unless otherwise defined, all technical and scientific terms used in the present application have the same meanings as commonly understood by those of ordinary skill in the technical field of the present application; the terms used in the specification of the present application in the present application are only for the purpose of describing specific embodiments, and are not intended to limit the present application; and the terms "including" and "having" and any variations thereof in the specification and claims of the present application and the above description of the drawings are intended to cover non-exclusive inclusion.

The terms "first", "second", and the like in the specification and claims of the present application or the above drawings are used to distinguish different objects, and are not used to describe a specific order or primary-secondary relationship.

The mention of "an embodiment" in the present application means that specific features, structures, or characteristics described in combination with the embodiment can be included in at least one embodiment of the present application. The appearance of the phrase in various places in the specification does not necessarily refer to the same embodiment, nor is it an independent or alternative embodiment that is mutually exclusive with other embodiments.

"Multiple" appearing in the present application refers to more than two (including two).

The battery mentioned in the embodiments of the present application refers to a single physical module that includes a plurality of battery cells to provide higher voltage and capacity. For example, the battery mentioned in the present application may include a battery module, a battery pack, or the like. The battery may also generally include a case for packaging one or more battery cells or multiple battery modules. The case can prevent liquids or other foreign objects from affecting the charging or discharging of the battery cells.

The battery cell includes an electrode assembly and an electrolyte, where the electrode assembly is composed of a positive electrode sheet, a negative electrode sheet, and a separator. The battery cell mainly operates by movement of metal ions between the positive electrode sheet and the negative electrode sheet. The positive electrode sheet includes a positive electrode current collector and a positive electrode active material layer, where the positive electrode active material layer is applied on the surface of the positive electrode current collector, and the current collector not coated with the positive electrode active material layer serves as a positive electrode tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode sheet includes a negative electrode current collector and a negative electrode active material layer, where the negative electrode active material layer is applied on the surface of the negative electrode current collector, and the current collector not coated with the negative electrode active material layer serves as a negative electrode tab. The material of the negative electrode current collector may be copper, and the negative electrode active material may be carbon or silicon, or the like. In order to ensure that no fusing occurs when passing a large current, the positive electrode tab is provided in multiple, and the multiple positive electrode tab are stacked together; and the negative electrode tab is provided in multiple and the multiple negative electrode tab are stacked together. The material of the separator may be PP (polypropylene, polypropylene), PE (polyethylene, polyethylene), or the like.

The battery cell further includes a casing component, where casing component may be an end cap or a case, and the end cap closes an opening of the case to define an accommodating space for accommodating the electrode assembly.

The battery has outstanding advantages such as high energy density, low environmental pollution, high power density, long service life, wide adaptation range, and low self-discharge factor, and is an important part of the development of new energy today. With the development of the new energy industry, batteries are gradually developing toward large-scale and integrated directions. The development of battery technology needs to consider multiple design factors at the same time, such as performance parameters including energy density, discharge capacity, and charge-discharge rate. In addition, the service life of the battery needs to be considered.

However, during operation of the battery cell, heat and gas are generated, resulting in an increase in the internal pressure of the battery cell. If the internal pressure of the battery cell cannot be released in time, problems such as thermal runaway or even explosion are likely to occur. Therefore, the battery cell can form a pressure relief channel when the internal pressure of the battery cell reaches a threshold value by providing a pressure relief mechanism, to release the internal pressure of the battery cell, so as to reduce the possibility of thermal runaway of the battery cell. The pressure relief mechanism may include a score groove formed on the casing of the battery cell, but during the charging and discharging process of the battery cell, the internal pressure changes, and the area around the score groove is prone to deformation under force. Moreover, in the repeated change process of the internal pressure of the battery cell becoming larger-smaller-larger, the area around the score groove is also prone to repeated deformation, causing the region around the score groove to be in a state of long-term breathing fatigue, which tends to cause premature cracking, thereby resulting in leakage of the battery cell, affecting the normal charging and discharging of the battery cell, and shortening the service life of the battery cell.

Based on the above considerations, the present application provides a casing component, applied to a battery cell, where the casing component is provided with a recess, a bottom wall of the recess is provided with a score groove, in a circumferential direction of the recess, the score groove extends along a closed trajectory, the score groove includes a first groove segment and a second groove segment, a sidewall of the recess includes a first sidewall located outside the first groove segment and a second sidewall located outside the second groove segment, and a maximum distance between the first groove segment and the first sidewall is greater than a maximum distance between the second groove segment and the second sidewall.

In the technical solution of the present application, by providing a recess in the casing component and providing a score groove on the bottom wall of the recess, the score groove can be opened to perform pressure relief when the internal pressure of the battery cell reaches a threshold value, which can reduce the possibility of thermal runaway or even explosion of the battery cell; by configuring the score groove to extend along a closed trajectory in the circumferential direction of the recess, with the score groove including a first groove segment and a second groove segment, the sidewall of the recess including a first sidewall located outside the first groove segment and a second sidewall located outside the second groove segment, and the maximum distance between the first groove segment and the first sidewall set to be greater than the maximum distance between the second groove segment and the second sidewall, since when the casing component is subjected to force, the joint of the bottom wall and the sidewall of the recess is more prone to deformation, the stress is more concentrated, and the stress propagates from the joint of the bottom wall and the sidewall toward the middle of the bottom wall, the stress on the bottom wall of the recess decreases as the distance from the sidewall increases. Thus, the force exerted on the first groove segment is less than the force exerted on the second groove segment when the internal pressure of the battery cell acts on the casing component, thereby making the possibility of deformation of the region enclosed by the score groove under force smaller and the possibility of premature cracking of the score groove smaller, and thus extending the service life of the battery cell. In addition, the second groove segment is close to the second sidewall, which can make the area of the pressure relief region formed by enclosing the score groove larger. After the score groove is opened under force, a larger pressure relief channel can be formed, which facilitates rapid pressure relief of the battery cell and further reduces the possibility of thermal runaway or even explosion of the battery cell.

The battery cell disclosed in the embodiments of the present application can but is not limited to be used in electric devices such as vehicles, ships, or aircraft. A power system of the electric device may be composed using the battery disclosed in the present application.

An embodiment of the present application provides an electric device using a battery as a power source, and the electric device may be but is not limited to electric tools, battery cars, electric vehicles, ships, and spacecraft. The electric toys may include fixed or mobile electric toys, such as game consoles, electric vehicle toys, electric ship toys, and electric aircraft toys, and the spacecraft may include airplanes, rockets, space shuttles, and spaceships, or the like.

The battery described in the embodiments of the present application is not only limited to the electric devices described above, but can also be applied to all electric devices requiring a battery power supply. For brevity of description, the following embodiments take a vehicle as an example of an electric device for illustration.

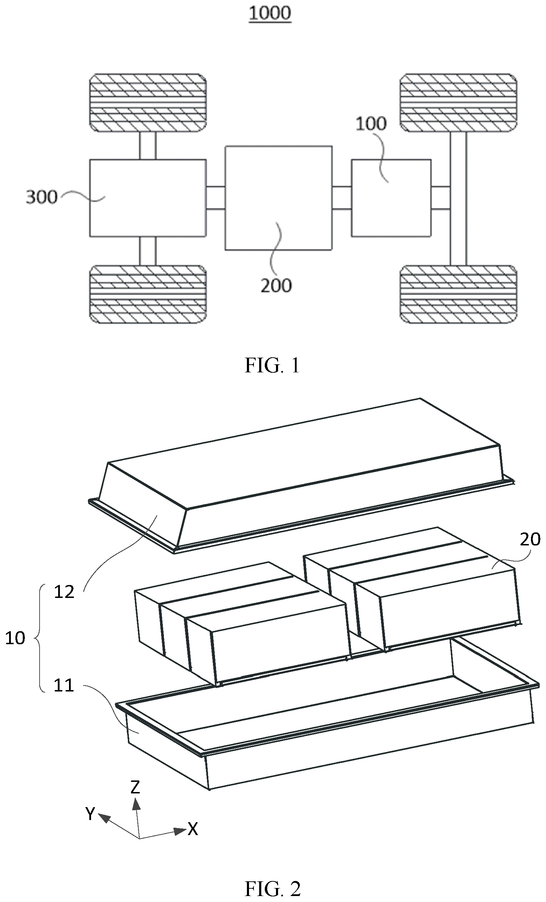

Referring to FIG. 1, FIG. 1 is a structural schematic diagram of a vehicle according to some embodiments of the present application. The vehicle 1000 may be a fuel vehicle, a gas vehicle, or a new energy vehicle, and the new energy vehicle may be a battery electric vehicle, a hybrid electric vehicle, an extended-range electric vehicle, or the like. A battery 100 is provided inside the vehicle 1000, and the battery 100 may be provided at the bottom, front, or rear of the vehicle 1000. The battery 100 may be used for power supply of the vehicle 1000, for example, the battery 100 may serve as an operating power source of the vehicle 1000 for the circuit system of the vehicle 1000, for example, to meet the operational power needs of starting, navigation, and in-operation of the vehicle 1000.

The vehicle 1000 may further include a controller 200 and a motor 300, where the controller 200 is configured to control the battery 100 to supply power to the motor 300, for example, to meet the operational power needs of starting, navigation, and driving of the vehicle 1000.

In some embodiments of the present application, the battery 100 can not only serve as an operating power source of the vehicle 1000, but also as a driving power source of the vehicle 1000, replacing or partially replacing fuel or natural gas to provide driving power for the vehicle 1000.

Referring to FIG. 2, FIG. 2 is an exploded structural schematic diagram of a battery according to some embodiments of the present application. The battery 100 includes a case 10 and a battery cell 20, and the battery cell 20 is accommodated in the case 10. The case 10 is configured to provide an accommodating space for the battery cell 20, and the case 10 can adopt multiple structures. In some embodiments, the case 10 may include a first sub-box 11 and a second sub-box 12, where the first sub-box 11 and the second sub-box 12 are covered with each other, and the first sub-box 11 and the second sub-box 12 together define an accommodating space for accommodating the battery cell 20. The first sub-box 11 may be a hollow structure with one end open, the second sub-box 12 may be a plate-like structure, and the second sub-box 12 is covered on the opening side of the first sub-box 11, such that the first sub-box 11 and the second sub-box 12 together define the accommodating space; the first sub-box 11 and the second sub-box 12 may also both be hollow structures with one side open, and the opening side of the second sub-box 12 is covered on the opening side of the first sub-box 11.

In some embodiments, the case 10 may be a rectangular parallelepiped.

In some other embodiments, the case 10 may also be a cylinder.

In some embodiments, the case 10 may be made of aluminum, aluminum alloy, or other metal materials, such that the case 10 has high load-bearing performance.

In some other embodiments, the case 10 may also be made of non-metallic materials with high strength, such as carbon fiber or rigid plastics.

In the battery 100, the battery cell 20 may be multiple, and the multiple battery cells 20 may be connected in series, in parallel, or in a series-parallel combination, where the in series-parallel combination refers to both series and parallel connections among multiple battery cells 20. Multiple battery cells 20 may be directly connected in series, in parallel, or in a series-parallel combination, and then the entirety formed by the multiple battery cells 20 is accommodated in the case 10. Certainly, the battery 100 may also first connect multiple battery cells 20 in series, in parallel, or in a series-parallel combination to form a battery module, and then multiple battery modules are connected in series, in parallel, or in a series-parallel combination to form an entirety, and accommodated in the case 10. The battery 100 may also include other structures, for example, the battery 100 may further include a busbar component for achieving electrical connection between a plurality of battery cells 20.

The battery cell 20 may be a secondary battery or a primary battery; and the battery cell 20 may alternatively be a lithium-sulfur battery, a sodium-ion battery, or a magnesium-ion battery, but is not limited thereto.

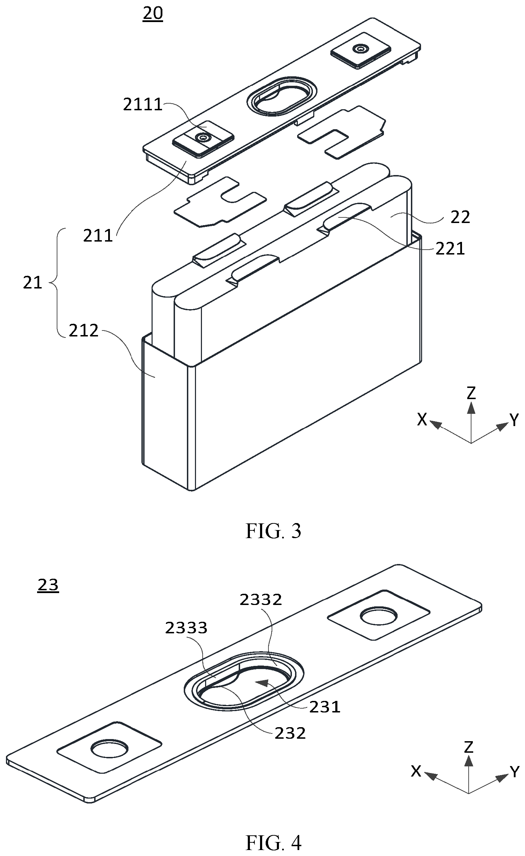

Referring to FIG. 3, FIG. 3 is an exploded structural schematic diagram of a battery cell according to some embodiments of the present application. As shown in FIG. 3, the battery cell 20 includes a casing 21, an electrode assembly 22, and other functional components.

The casing 21 includes an end cap 211 and a case 212, where the case 212 has an opening, and the end cap 211 closes the opening.

The end cap 211 refers to a component that covers the opening of the case 212 to isolate the internal environment of the battery cell 20 from the external environment. Without limitation, the shape of the end cap 211 may be adapted to the shape of the case 212 to cooperate with the case 212. Optionally, the end cap 211 may be made of a material with a certain hardness and strength (such as aluminum alloy), such that the end cap 211 is less prone to deformation when subjected to extrusion or collision, enabling the battery cell 20 to have higher structural strength and improved safety performance. Functional components such as an electrode terminal 2111 may be provided on the end cap 211. The electrode terminal 2111 may be configured to electrically connect with the electrode assembly 22 for outputting or inputting electrical energy of the battery cell 20. The end cap 211 may also be made of various materials, such as copper, iron, aluminum, stainless steel, and aluminum alloy. In some embodiments, an insulating structure may alternatively be provided on the inner side of the end cap 211, and the insulating structure may be configured to isolate electrical connection components in the case 212 from the end cap 211, so as to reduce the risk of short circuit. Exemplarily, the insulating structure may be plastic, rubber, or the like.

The case 212 is a component used to cooperate with the end cap 211 to form the internal environment of the battery cell 20, where the formed internal environment may be used to accommodate the electrode assembly 22, the electrolyte, and other components. The case 212 and the end cap 211 may be independent components. The case 212 may have various shapes and sizes. Specifically, the shape of the case 212 may be determined according to the specific shape and size of the electrode assembly 22. The case 212 may be made of various materials, such as copper, iron, aluminum, stainless steel, and aluminum alloy.

In some embodiments, the case 212 may be a hollow structure with one side open, and the end cap 211 may be provided in a flat plate shape, and covers the opening of the case 212.

In some other embodiments, both the end cap 211 and the case 212 may be hollow structures with one side open, and the opening side of the end cap 211 is covered on the opening side of the case 212 to jointly form an accommodating space.

In some embodiments, the end cap 211 and the case 212 may be connected by welding.

In some other embodiments, the end cap 211 and the case 212 may also be fixedly connected by bonding, interference fit, or other methods.

In some embodiments, the battery cell 20 may be in a rectangular parallelepiped shape, such that multiple battery cells 20 may be arranged closely in a matrix, which helps to increase the energy density of the battery 100.

In some other embodiments, the battery cell 20 may alternatively be in a flat shape, a cylindrical shape, or other shapes.

The electrode assembly 22 is a component in the battery cell 20 where electrochemical reactions occur. One or more electrode assemblies 22 may be included in the case 212. The electrode assembly 22 is mainly formed by winding or stacking a positive electrode sheet and a negative electrode sheet, and a separator is usually disposed between the positive electrode sheet and the negative electrode sheet, and the separator is configured to separate the positive electrode sheet and the negative electrode sheet to prevent short circuit between the positive electrode sheet and the negative electrode sheet. The parts of the positive electrode sheet and the negative electrode sheet having active materials constitute the main body of the electrode assembly 22, and the parts of the positive electrode sheet and the negative electrode sheet not having active materials constitute tabs 221, respectively. The positive electrode tab and the negative electrode tab may be located together at one end of the main body or respectively at two ends of the main body. During the charging and discharging process of the battery, the positive electrode active material and the negative electrode active material react with the electrolyte, and the tab 221 connects to the electrode terminal 2111 to form a current loop.

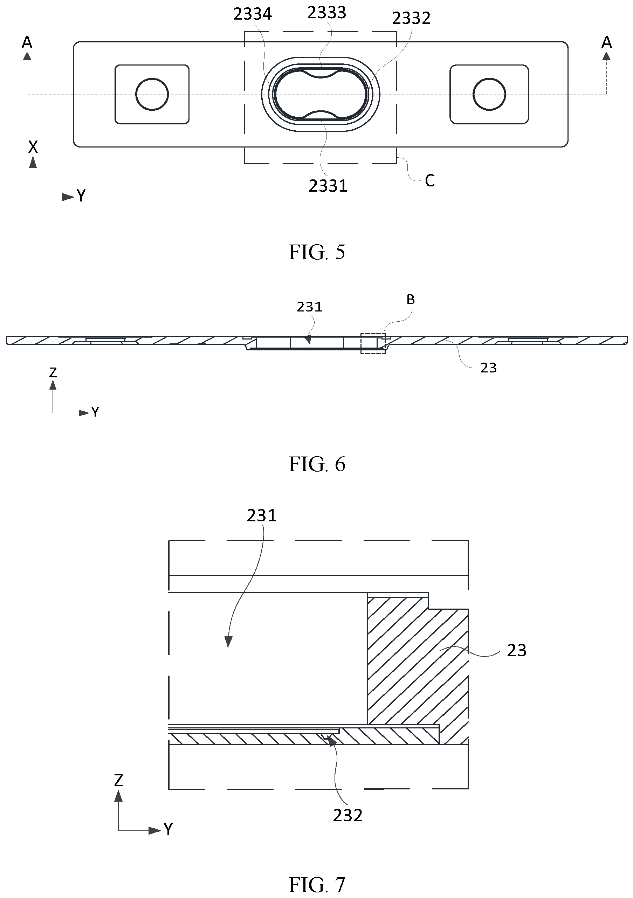

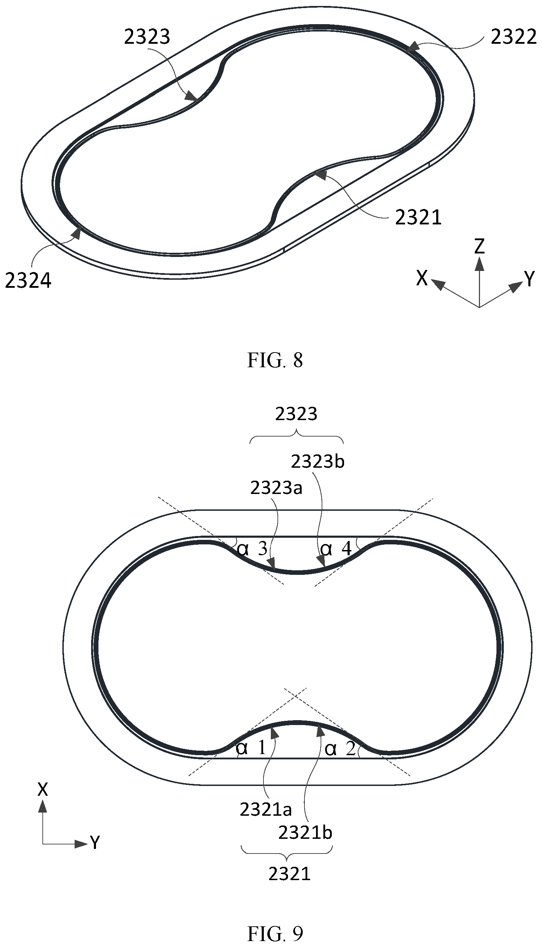

Referring to FIG. 4 to FIG. 8, FIG. 4 is a perspective structural schematic diagram of a casing component according to some embodiments of the present application; FIG. 5 is a structural schematic diagram of one perspective of a casing component according to some embodiments of the present application; FIG. 6 is a cross-sectional structural schematic diagram along A-A in FIG. 5 of the casing component; FIG. 7 is a partial enlarged structural schematic diagram at B in FIG. 6 of the casing component; and FIG. 8 is a perspective schematic diagram of a partial structure of a casing component according to some embodiments of the present application.

An embodiment of the present application provides a casing component 23, applied to a battery cell 20, where the casing component 23 is provided with a recess 231, a bottom wall of the recess 231 is provided with a score groove 232, in a circumferential direction of the recess 231, the score groove 232 extends along a closed trajectory, the score groove 232 includes a first groove segment 2321 and a second groove segment 2322, a sidewall of the recess 231 includes a first sidewall 2331 located outside the first groove segment 2321 and a second sidewall 2332 located outside the second groove segment 2322, and a maximum distance between the first groove segment 2321 and the first sidewall 2331 is greater than a maximum distance between the second groove segment 2322 and the second sidewall 2332.

The score groove 232 encloses a pressure relief region, the outside of the first groove segment 2321 refers to a side of the first groove segment 2321 away from the center of the pressure relief region, and the outside of the second groove segment 2322 refers to a side of the second groove segment 2322 away from the center of the pressure relief region.

The distance between the first groove segment 2321 and the first sidewall 2331 is a distance between the first groove segment 2321 and the first sidewall 2331 along a first direction X. The distance between the second groove segment 2322 and the second sidewall 2332 is a distance between the second groove segment 2322 and the second sidewall 2332 along a second direction Y.

The casing component 23 is a component constituting the casing of the battery cell 20.

The recess 231 is a structure of the casing component 23 for pressure relief, and a thickness of the casing component 23 at the recess 231 is thinner relative to a thickness of other parts of the casing component 23. This allows the battery cell 20 formed by the casing component 23 to rupture at the score groove 232 of the recess 231 during thermal runaway, so as to release the internal pressure of the battery cell 20.

The bottom wall of the recess 231 is disposed opposite to the opening of the recess 231, and the sidewall of the recess 231 refers to a wall of the recess 231 surrounding the bottom wall.

By providing a recess 231 in the casing component 23 and providing a score groove 232 in the bottom wall of the recess 231, the score groove 232 can be opened to perform pressure relief when the internal pressure of the battery cell 20 reaches a threshold value, which can reduce the possibility of thermal runaway or even explosion of the battery cell 20. By configuring the score groove 232 to extend along a closed trajectory in the circumferential direction of the recess 231, with the score groove 232 including a first groove segment 2321 and a second groove segment 2322, the sidewall of the recess 231 including a first sidewall 2331 located outside the first groove segment 2321 and a second sidewall 2332 located outside the second groove segment 2322, and the maximum distance between the first groove segment 2321 and the first sidewall 2331 set to be greater than the maximum distance between the second groove segment 2322 and the second sidewall 2332, since when the casing component 23 is subjected to force, the joint of the bottom wall and the sidewall of the recess 231 is more prone to deformation, the stress is more concentrated, and the stress propagates from the joint of the bottom wall and the sidewall toward the middle of the bottom wall, the stress on the bottom wall of the recess decreases as the distance from the sidewall increases. Thus, the force exerted on the first groove segment 2321 is less than the force exerted on the second groove segment 2322 when the internal pressure of the battery cell 20 acts on the casing component 23, thereby making the possibility of deformation of the region enclosed by the score groove 232 under force smaller and the possibility of premature cracking of the score groove 232 smaller, and thus extending the service life of the battery cell 20. In addition, the second groove segment 2322 is close to the second sidewall 2332, which can make the area of the pressure relief region formed by enclosing the score groove 232 larger. After the score groove 232 is opened under force, a larger pressure relief channel can be formed, which facilitates rapid pressure relief of the battery cell 20 and further reduces the possibility of thermal runaway or even explosion of the battery cell 20.

Still referring to FIG. 9, FIG. 9 is a schematic diagram of one perspective of a partial structure of a casing component according to some embodiments of the present application.

According to some embodiments of the present application, from two ends of the first groove segment 2321 toward the middle, the distance between the first groove segment 2321 and the first sidewall 2331 gradually increases.

By configuring the distance between the first groove segment 2321 and the first sidewall 2331 to gradually increase from two ends of the first groove segment 2321 toward the middle, the extension of the first groove segment 2321 can be smooth, and stress concentration points are not easily formed, thereby reducing the possibility of premature cracking caused by stress concentration on the first groove segment 2321 and extending the service life of the battery cell 20.

In some other embodiments, from two ends of the first groove segment 2321 toward the middle, the distance between the first groove segment 2321 and the first sidewall 2331 may partially gradually increase and partially remain unchanged, to be specific, the first groove segment 2321 may partially extend in a direction away from the first sidewall 2331 and partially extend in a direction parallel to the first sidewall 2331.

In some other embodiments, from one end of the first groove segment 2321 toward the middle, the distance between the first groove segment 2321 and the first sidewall 2331 may gradually increase, and the distance between the other end of the first groove segment 2321 and the first sidewall 2331 remains unchanged.

According to some embodiments of the present application, the first sidewall 2331 is a plane surface, and the second sidewall 2332 is a curved surface.

Since the casing component 23 provided in some embodiments of the present application is rectangular, a width of the casing component 23 along the first direction X is relatively narrow, while a length along the second direction Y is relatively long. This results in the size of the recess 231 provided on the casing component 23 being restricted along the first direction X, while the size along the second direction Y can be set larger. Therefore, by configuring the first sidewall 2331 as a plane surface, the length of the first sidewall 2331 can be set longer, making the area of the recess 231 larger. By configuring the second sidewall 2332 as a curved surface, a larger area of the recess can be enclosed under the condition that the width of the recess 231 along the first direction X is restricted, thereby making the area of the region enclosed by the score groove 232 also larger. After the score groove 232 is opened under force, a larger pressure relief channel can be formed, which facilitates rapid pressure relief of the battery cell 20 and further reduces the possibility of thermal runaway or even explosion of the battery cell 20.

In some other embodiments, the first sidewall 2331 may alternatively be a curved surface, and the second sidewall 2332 may alternatively be a plane surface.

According to some embodiments of the present application, the recess 231 further includes a third sidewall 2333 and a fourth sidewall 2334, where the third sidewall 2333 is disposed opposite to the first sidewall 2331 along the first direction X, the fourth sidewall 2334 is disposed opposite to the second sidewall 2332 along the second direction, and the first direction X intersects the second direction Y.

By configuring the third sidewall 2333 to be disposed opposite to the first sidewall 2331 along the first direction X, and the fourth sidewall 2334 to be disposed opposite to the second sidewall 2332 along the second direction Y, the distribution of the sidewalls of the recess 231 can be more uniform, and the force distribution on the bottom wall of the recess 231 can also be more uniform, so that stress concentration points are not easily formed on the score groove 232, which can reduce the possibility of premature cracking caused by stress concentration on the score groove 232 and extend the service life of the battery cell 20.

According to some embodiments of the present application, the first direction X is perpendicular to the second direction Y.

By configuring the first direction X to be perpendicular to the second direction Y, the first sidewall 2331 and the third sidewall 2333 of the recess 231, and the second sidewall 2332 and the fourth sidewall 2334 can be symmetrically arranged. This further makes the distribution of the sidewalls of the recess 231 more uniform and the force distribution on the recess 231 more uniform, so that stress concentration points are not easily formed on the score groove 232, which can reduce the possibility of premature cracking caused by stress concentration on the score groove 232, and extends the service life of the battery cell 20.

According to some embodiments of the present application, the first direction X, the second direction Y, and the third direction Z are pairwise perpendicular. The first direction X is parallel to a width direction of the casing component 23, the second direction Y is parallel to a length direction of the casing component 23, and the third direction Z is parallel to a thickness direction of the casing component 23.

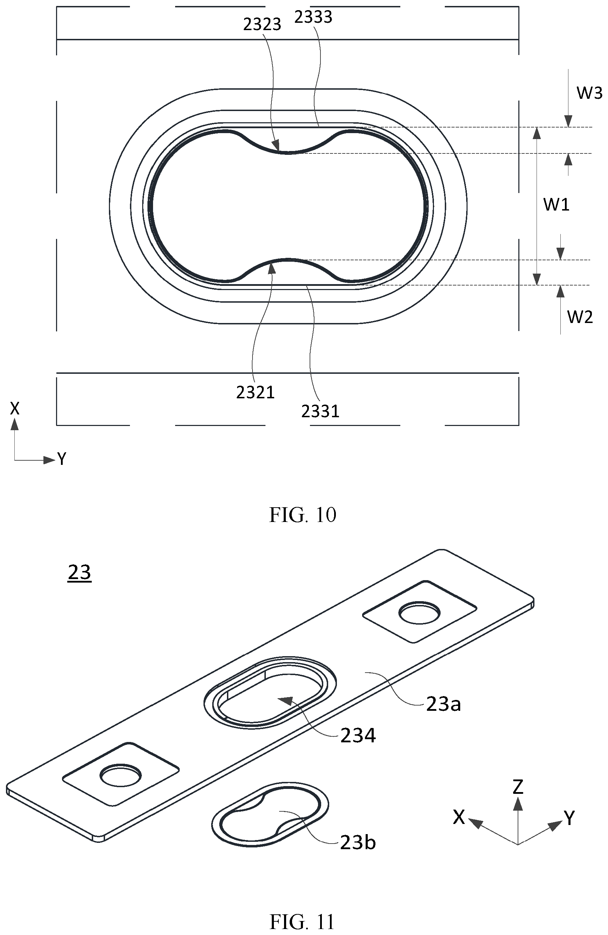

Still referring to FIG. 10, FIG. 10 is a partial enlarged structural schematic diagram at C in FIG. 5 of the casing component.

According to some embodiments of the present application, along the first direction X, a distance between the first sidewall 2331 and the third sidewall 2333 is W1, and a maximum distance between the first groove segment 2321 and the first sidewall 2331 is W2, satisfying 10% × W1 ≤ W2 ≤ 70% × W1, for example, W2 may be 10% × W1, 40% × W1, 70% × W1, or the like.

By configuring the distance W1 between the first sidewall 2331 and the third sidewall 2333 along the first direction X and the maximum distance W2 between the first groove segment 2321 and the first sidewall 2331 to satisfy 10% × W1 ≤ W2 ≤ 70% × W1, the fabrication of the score groove 232 is facilitated, and the force exerted on the first groove segment 2321 from the inside of the battery cell 20 is smaller, thereby making the possibility of deformation of the region enclosed by the score groove 232 under force smaller, the improvement in deformation resistance more obvious, and the possibility of premature cracking of the score groove 232 smaller, and thus extending the service life of the battery cell 20.

According to some embodiments of the present application, the score groove 232 further includes a third groove segment 2323, the third groove segment 2323 is spaced apart from the first groove segment 2321 along the first direction X, the second groove segment 2322 connects the first groove segment 2321 and the third groove segment 2323, and a maximum distance between the third groove segment 2323 and the third sidewall 2333 is greater than a maximum distance between the second groove segment 2322 and the second sidewall 2332.

The distance between the third groove segment 2323 and the third sidewall 2333 is a distance between the third groove segment 2323 and the third sidewall 2333 along the first direction X.

By providing the third groove segment 2323, and arranging the third groove segment 2323 to be spaced apart from the first groove segment 2321 along the first direction X, with the second groove segment 2322 connecting the first groove segment 2321 and the third groove segment 2323, and the maximum distance between the third groove segment 2323 and the third sidewall 2333 set to be greater than the maximum distance between the second groove segment 2322 and the second sidewall 2332, when the internal pressure of the battery cell 20 acts on the casing component 23, the force exerted on the third groove segment 2323 is less than the force exerted on the second groove segment 2322. Moreover, due to the combined action of the first groove segment 2321 and the third groove segment 2323, the possibility of deformation of the region enclosed by the score groove 232 under force can be further lowered, the deformation resistance is stronger, the possibility of premature cracking of the score groove 232 is smaller, and thus the service life of the battery cell 20 can be extended.

According to some embodiments of the present application, from two ends of the third groove segment 2323 toward the middle, the distance between the third groove segment 2323 and the third sidewall 2333 gradually increases.

By configuring the distance between the third groove segment 2323 and the third sidewall 2333 to gradually increase from two ends of the third groove segment 2323 toward the middle, the extension of the third groove segment 2323 can be smooth, and stress concentration points are not easily formed, thereby reducing the possibility of premature cracking caused by stress concentration on the third groove segment 2323 and extending the service life of the battery cell 20.

In some other embodiments, from two ends of the third groove segment 2323 toward the middle, the distance between the third groove segment 2323 and the third sidewall 2333 may partially gradually increase and partially remain unchanged, to be specific, the third groove segment 2323 may partially extend in a direction away from the third sidewall 2333 and partially extend in a direction parallel to the third sidewall 2333.

In some other embodiments, from one end of the third groove segment 2323 toward the middle, the distance between the third groove segment 2323 and the third sidewall 2333 may gradually increase, and the distance between the other end of the third groove segment 2323 and the third sidewall 2333 remains unchanged.

According to some embodiments of the present application, the third sidewall 2333 is a plane surface.

Since the casing component 23 provided in some embodiments of the present application is rectangular, a width of the casing component 23 along the first direction X is relatively narrow, while a length along the second direction Y is relatively long. This results in the size of the recess 231 provided on the casing component 23 being restricted along the first direction X, while the size along the second direction Y can be set larger. Therefore, by configuring the third sidewall 2333 as a plane surface, the length of the third sidewall 2333 can be set longer, making the area of the recess 231 larger, thereby making the area of the region enclosed by the score groove 232 also larger. After the score groove 232 is opened under force, a larger pressure relief channel can be formed, which facilitates rapid pressure relief of the battery cell 20 and further reduces the possibility of thermal runaway or even explosion of the battery cell 20.

In some other embodiments, the third side surface 2333 may also be a curved surface.

According to some embodiments of the present application, along the first direction X, a distance between the first sidewall 2331 and the third sidewall 2333 is W1, and a maximum distance between the third groove segment 2323 and the third sidewall 2333 is W3, satisfying 10% × W1 ≤ W3 ≤ 70% × W1, for example, W3 may be 10% × W1, 40% × W1, 70% × W1, or the like.

By configuring the distance W1 between the first sidewall 2331 and the third sidewall 2333 along the first direction X and the maximum distance W3 between the third groove segment 2323 and the third sidewall 2333 to satisfy 10% × W1 ≤ W3 ≤ 70% × W1, the fabrication of the score groove 232 is facilitated, and the force exerted on the third groove segment 2323 from the inside of the battery cell 20 is smaller, thereby making the possibility of deformation of the region enclosed by the score groove 232 under force smaller, the improvement in deformation resistance more obvious, and the possibility of premature cracking of the score groove 232 smaller, and thus extending the service life of the battery cell 20.

According to some embodiments of the present application, the first groove segment 2321 and the third groove segment 2323 are symmetrically arranged relative to the center point of the recess 231.

The center point of the recess 231 may be the geometric center point of the bottom wall of the recess 231.

By configuring the first groove segment 2321 and the third groove segment 2323 symmetrically arranged relative to the center point of the recess 231, the force exerted on the score groove 232 can be more uniform, the possibility of deformation of the region enclosed by the score groove 232 under force is smaller, the deformation resistance is stronger, the possibility of premature cracking of the score groove 232 is smaller, and thus the service life of the battery cell 20 can be extended.

According to some embodiments of the present application, the score groove 232 further includes a fourth groove segment 2324, where the fourth groove segment 2324 is spaced apart from the second groove segment 2322 along the second direction Y.

By providing the fourth groove segment 2324, and arranging the fourth groove segment 2324 to be spaced apart from the second groove segment 2322 along the second direction, the distribution of the score groove 232 can be more uniform, the possibility of the formation of stress concentration points on the score groove 232 is smaller, and the possibility of premature cracking of the score groove 232 is smaller, thereby extending the service life of the battery cell 20.

According to some embodiments of the present application, the first groove segment 2321, the second groove segment 2322, the third groove segment 2323, and the fourth groove segment 2324 are connected end to end to form a closed loop.

By arranging the first groove segment 2321, the second groove segment 2322, the third groove segment 2323, and the fourth groove segment 2324 to be connected end to end to form a closed loop, when thermal runaway occurs in the battery cell 20, the score groove 232 can be opened, and the region enclosed by the score groove 232 can be separated from other regions of the casing component 23 to form a pressure relief channel with a larger area, which facilitates rapid pressure relief of the battery cell 20 and further reduces the possibility of thermal runaway or even explosion of the battery cell 20.

According to some embodiments of the present application, a maximum distance between the first groove segment 2321 and the first sidewall 2331 is greater than a maximum distance between the fourth groove segment 2324 and the fourth sidewall 2334.

The distance between the fourth groove segment 2324 and the fourth sidewall 2334 is the distance between the fourth groove segment 2324 and the fourth sidewall 2334 along the first direction X.

By configuring the maximum distance between the first groove segment 2321 and the first sidewall 2331 to be greater than the maximum distance between the fourth groove segment 2324 and the fourth sidewall 2334, the force exerted on the first groove segment 2321 is less than the force exerted on the fourth groove segment 2324, thereby making the possibility of deformation of the region enclosed by the score groove 232 under force smaller.

According to some embodiments of the present application, the fourth sidewall 2334 is a curved surface.

Since the casing component 23 provided in some embodiments of the present application is rectangular, a width of the casing component 23 along the first direction X is relatively narrow, while a length along the second direction Y is relatively long. This results in the size of the recess 231 provided on the casing component 23 being restricted along the first direction X. Therefore, by configuring the fourth sidewall 2334 as a curved surface, a larger area of the recess can be enclosed under the condition that the width of the recess 231 along the first direction X is restricted, thereby making the area of the region enclosed by the score groove 232 also larger. After the score groove 232 is opened under force, a larger pressure relief channel can be formed, which facilitates rapid pressure relief of the battery cell 20 and further reduces the possibility of thermal runaway or even explosion of the battery cell 20.

In some other embodiments, the fourth sidewall 2334 may also be a plane surface.

According to some embodiments of the present application, the second groove segment 2322 and the fourth groove segment 2324 are symmetrically arranged relative to the center point of the recess 231.

By configuring the second groove segment 2322 and the fourth groove segment 2324 to be symmetrically arranged relative to the center point of the recess 231, the force exerted on the score groove 232 can be more uniform, the possibility of deformation of the region enclosed by the score groove 232 under force is smaller, the deformation resistance is stronger, the possibility of premature cracking of the score groove 232 is smaller, and thus the service life of the battery cell 20 can be extended.

According to some embodiments of the present application, depths of the first groove segment 2321, the second groove segment 2322, and the fourth groove segment 2324 are greater than a depth of the third groove segment 2323.

The depth of the score groove 232 is a dimension of the score groove 232 in a third direction Z.

By configuring the depths of the first groove segment 2321, the second groove segment 2322, and the fourth groove segment 2324 to be greater than the depth of the third groove segment 2323, the first groove segment 2321, the second groove segment 2322, and the fourth groove segment 2324 can be opened under force prior to the second groove segment 2322 to form a pressure relief channel, and the region enclosed by the score groove 232 in the casing component 23 is kept connected to other regions, which reduces the possibility of damage caused by interference with other components after the region enclosed by the score groove 232 is separated from other regions.

In some other embodiments, the depths of any other three groove segments among the first groove segment 2321, the second groove segment 2322, the third groove segment 2323, and the fourth groove segment 2324 may alternatively be greater than the depth of the other groove segment, for example, the depths of the first groove segment 2321, the second groove segment 2322, and the third groove segment 2323 are greater than the depth of the fourth groove segment 2324.

In some other embodiments, the depths of two connected groove segments among the first groove segment 2321, the second groove segment 2322, the third groove segment 2323, and the fourth groove segment 2324 may alternatively be greater than the depths of the other two groove segments, for example, the depths of the first groove segment 2321 and the second groove segment 2322 are greater than the depths of the third groove segment 2323 and the fourth groove segment 2324.

In some other embodiments, the depth of one groove segment among the first groove segment 2321, the second groove segment 2322, the third groove segment 2323, and the fourth groove segment 2324 may alternatively be greater than the depths of the other three groove segments, for example, the depth of the first groove segment 2321 is greater than the depths of the second groove segment 2322, the third groove segment 2323, and the fourth groove segment 2324.

In some other embodiments, depths of a plurality of groove segments greater than the depths of other groove segments may be the same or different. For example, under a condition that the depths of the first groove segment 2321, the second groove segment 2322, and the fourth groove segment 2324 are greater than the depth of the third groove segment 2323, the depths of the first groove segment 2321, the second groove segment 2322, and the fourth groove segment 2324 may alternatively be different. For example, the depth of the first groove segment 2321 is greater than the depth of the fourth groove segment 2324, and the depth of the second groove segment 2322 is greater than the depth of the first groove segment 2321, so that the second groove segment 2322, the first groove segment 2321, the fourth groove segment 2324, and the third groove segment 2323 can be opened in sequence when the internal pressure of the battery cell 20 reaches the threshold value, and a greater internal pressure of the battery cell 20 indicates a more number of groove segments opened, a larger area of the formed pressure relief channel, and a faster pressure relief speed.

According to some embodiments of the present application, along the first direction X, a distance between the first sidewall 2331 and the third sidewall 2333 is W1, a maximum distance between the first groove segment 2321 and the first sidewall 2331 is W2, and a maximum distance between the third groove segment 2323 and the third sidewall 2333 is W3, satisfying W2 + W3 < W1.

By configuring the distance W1 between the first sidewall 2331 and the third sidewall 2333 along the first direction X, the maximum distance W2 between the first groove segment 2321 and the first sidewall 2331, and the maximum distance W3 between the third groove segment 2323 and the third sidewall 2333 to satisfy W2 + W3 < W1, the first groove segment 2321 and the third groove segment 2323 are not connected, thereby mitigating the problem of stress concentration at the connection and easy cracking caused by the joint of the first groove segment 2321 and the third groove segment 2323, making the possibility of premature cracking of the score groove 232 smaller, and thus extending the service life of the battery cell 20.

According to some embodiments of the present application, the first groove segment 2321 and the second groove segment 2322 are both arc segments.

By arranging the first groove segment 2321 and the second groove segment 2322 to be both arc segments, the extension of the first groove segment 2321 and the second groove segment 2322 can be smooth, and stress concentration points are not easily formed, thereby reducing the possibility of premature cracking caused by stress concentration on the first groove segment 2321 and the second groove segment 2322 and extending the service life of the battery cell 20. Moreover, the second groove segment 2322 can enclose a larger area, so that after the score groove 232 is opened under force, a larger pressure relief channel can be formed, which facilitates rapid pressure relief of the battery cell 20 and further reduces the possibility of thermal runaway or even explosion of the battery cell 20.

According to some embodiments of the present application, the third groove segment 2323 and the fourth groove segment 2324 are both arc segments.

By configuring the third groove segment 2323 and the fourth groove segment 2324 to be both arc segments, the extension of the third groove segment 2323 and the fourth groove segment 2324 can be smooth, and stress concentration points are not easily formed, thereby reducing the possibility of premature cracking caused by stress concentration on the third groove segment 2323 and the fourth groove segment 2324 and extending the service life of the battery cell 20. Moreover, the fourth groove segment 2324 can enclose a larger area, so that after the score groove 232 is opened under force, a larger pressure relief channel can be formed, which facilitates rapid pressure relief of the battery cell 20 and further reduces the possibility of thermal runaway or even explosion of the battery cell 20.

According to some embodiments of the present application, an arc transition is provided between the first groove segment 2321 and the second groove segment 2322.

By configuring an arc transition between the first groove segment 2321 and the second groove segment 2322, the transition portion between the first groove segment 2321 and the second groove segment 2322 can be smooth, and stress concentration points are not easily formed, thereby reducing the possibility of premature cracking caused by stress concentration on the first groove segment 2321 and extending the service life of the battery cell 20.

According to some embodiments of the present application, arc transitions are provided between the second groove segment 2322 and the third groove segment 2323, between the third groove segment 2323 and the fourth groove segment 2324, and between the fourth groove segment 2324 and the first groove segment 2321, so that the transition portions between adjacent groove segments are smooth, and stress concentration points are not easily formed, thereby reducing the possibility of premature cracking caused by stress concentration on each groove segment and extending the service life of the battery cell 20.

According to some embodiments of the present application, the first groove segment 2321 includes a first sub-groove segment 2321a and a second sub-groove segment 2321b, where an included angle between a tangent to the first sub-groove segment 2321a and the first sidewall 2331 is α1, and an included angle between a tangent to the second sub-groove segment 2321b and the first sidewall 2331 is α2, satisfying 40° ≤ α1 ≤ 80°, 40° ≤ α2 ≤ 80°, for example, α1 may be 40°, 60°, 80°, or the like, and α2 may be 40°, 55°, 80°, or the like.

By configuring the included angle α1 between the tangent to the first sub-groove segment 2321a and the first sidewall 2331, and the included angle α2 between the tangent to the second sub-groove segment 2321b and the first sidewall 2331 to satisfy 40° ≤ α1 ≤ 80°, 40° ≤ α2 ≤ 80°, on one hand, the first groove segment 2321 can be further away from the first sidewall 2331 of the recess 231 to further reduce the pressure exerted on the first groove segment 2321 from the inside of the battery cell; on the other hand, the corner degree at the joint of the first sub-groove segment 2321a, the second sub-groove segment 2321b, and other groove segments can be reduced, thereby reducing the possibility of the formation of stress concentration points at the joints of the first sub-groove segment 2321a, the second sub-groove segment 2321b, and other groove segments, making the possibility of deformation of the region enclosed by the score groove 232 under force smaller, the deformation resistance stronger, the possibility of premature cracking of the score groove 232 smaller, and thus extending the service life of the battery cell 20.

According to some embodiments of the present application, the third groove segment 2323 includes a third sub-groove segment 2323a and a fourth sub-groove segment 2323b, where an included angle between a tangent to the third sub-groove segment 2323a and the third sidewall 2333 is α3, and an included angle between a tangent to the fourth sub-groove segment 2323b and the third sidewall 2333 is α4, satisfying 40° ≤ α3 ≤ 80°, 40° ≤ α4 ≤ 80°, for example, α3 may be 40°, 65°, 80°, or the like, and α4 may be 40°, 50°, 80°, or the like.

By configuring the included angle α3 between the tangent to the third sub-groove segment 2323a and the third sidewall 2333, and the included angle α4 between the tangent to the fourth sub-groove segment 2323b and the third sidewall 2333 to satisfy 40° ≤ α3 ≤ 80°, 40° ≤ α4 ≤ 80°, on one hand, the third groove segment 2323 can be further away from the third sidewall 2333 of the recess 231 to further reduce the pressure exerted on the third groove segment 2323 from the inside of the battery cell; on the other hand, the corner degree at the joint of the third sub-groove segment 2323a, the fourth sub-groove segment 2323b, and other groove segments can be reduced, thereby reducing the possibility of the formation of stress concentration points at the joints of the third sub-groove segment 2323a, the fourth sub-groove segment 2323b, and other groove segments, making the possibility of deformation of the region enclosed by the score groove 232 under force smaller, the deformation resistance stronger, the possibility of premature cracking of the score groove 232 smaller, and thus extending the service life of the battery cell 20.

According to some embodiments of the present application, a length of the second groove segment 2322 is L1, and a length of the score groove 232 is L, satisfying L1 ≥ 1/4 × L, for example, L1 may be 1/4 × L, 1/3 × L, 2/5 × L, or the like.

By configuring the length L1 of the second groove segment 2322 and the length L of the score groove 232 to satisfy L1 ≥ 1/4 × L, the length of the second groove segment 2322 in the score groove 232 that bears a greater force than the first groove segment 2321 can be longer, when the internal pressure of the battery cell 20 reaches the threshold value, the second groove segment 2322 is easy to open for pressure relief, and the area of the pressure relief region formed by enclosing the score groove 232 is larger, after the score groove 232 is opened under force, a larger pressure relief channel can be formed, which facilitates rapid pressure relief of the battery cell 20 and further reduces the possibility of thermal runaway or even explosion of the battery cell 20.

According to some embodiments of the present application, a length of the fourth groove segment 2324 is L2, and a length of the score groove 232 is L, satisfying L2 ≥ 1/4 × L, for example, L2 may be 1/4 × L, 1/3 × L, 2/5 × L, or the like.

By configuring the length L2 of the fourth groove segment 2324 and the length L of the score groove 232 to satisfy L2 ≥ 1/4 × L, the length of the fourth groove segment 2324 in the score groove 232 that bears a greater force than the first groove segment 2321 and the third groove segment 2323 can be longer, when the internal pressure of the battery cell 20 reaches the threshold value, the fourth groove segment 2324 is easy to open for pressure relief, which can reduce the possibility of thermal runaway or even explosion in the battery cell 20.

Referring to FIG. 11, FIG. 11 is an exploded structural schematic diagram of a casing component according to some embodiments of the present application.

According to some embodiments of the present application, the casing component 23 includes a body 23a and a pressure relief member 23b, where the body 23a is provided with a through hole 234, and the pressure relief member 23b covers the through hole 234 to form the recess 231. The fabrication and assembly of the body 23a and the pressure relief member 23b are simple, which facilitates the formation of the recess 231.

In some other embodiments, the body 23a and the pressure relief member 23b may also be integrally formed. The recess 231 may be formed by recessing from the side of the casing component 23 facing away from the electrode assembly 22 toward the electrode assembly 22. The connection strength between the body 23a and the pressure relief member 23b can be greater, and the pressure relief member 23b is not easy to separate from the body 23a when thermal runaway does not occur in the battery cell 20, thereby extending the service life of the battery cell 20.

In some other embodiments, the recess 231 may also be formed by recessing from the side of the casing component 23 facing the electrode assembly 22 in a direction away from the electrode assembly 22.

Referring to FIG. 3 and FIG. 4, according to some embodiments of the present application, an embodiment of the present application further provides a battery cell 20, including the casing component 23 provided in any of the above embodiments.

According to some embodiments of the present application, the battery cell 20 includes a case 212 and an end cap 211, where the case 212 has an opening, the end cap 211 closes the opening, and the casing component 23 is the end cap 211.

The casing component 23 is the end cap 211, which can achieve pressure relief when the internal pressure of the battery cell 20 reaches the threshold value, so as to reduce the possibility of thermal runaway or even explosion occurred in the battery cell 20. By providing the score groove 232 on the end cap 211 to form a pressure relief structure, the pressure relief structure has good stability and good long-term reliability.

According to some embodiments of the present application, the recess 231 is provided on a side of the end cap 211 facing away from the electrode assembly 22, to be specific, the opening of the recess 231 faces away from the electrode assembly 22.

In some other embodiments, the recess 231 may alternatively be provided on a side of the end cap 211 facing the electrode assembly 22, to be specific, the opening of the recess 231 faces the electrode assembly 22.

In some other embodiments, the casing component 23 may alternatively be the case 212, the case 212 includes a plurality of wall portions, the plurality of wall portions jointly define an accommodating space, the accommodating space is used to accommodate the electrode assembly 22 of the battery cell 20, and the recess 231 is provided on at least one of the plurality of wall portions.

In the case 212, the recess 231 may be provided on one wall portion or on a plurality of wall portions.

In some other embodiments, a plurality of recesses 231 and score grooves 232 may alternatively be provided on one wall portion of the end cap 211 or the case 212.

In the above solution, the casing component 23 has both the function of accommodating the electrode assembly 22 and the pressure relief function.

Referring to FIG. 2, according to some embodiments of the present application, an embodiment of the present application further provides a battery 100, including the battery cell 20 provided in any of the above embodiments.

According to some embodiments of the present application, an embodiment of the present application further provides an electric device, including the battery 100 provided in any of the above embodiments.

The electric device may be any device that uses the battery as described above.

According to some embodiments of the present application, referring to FIG. 3 to FIG. 11, an embodiment of the present application provides a casing component 23, where the casing component 23 is provided with a recess 231, a bottom wall of the recess 231 is provided with a score groove 232, and in a circumferential direction of the recess 231, the score groove 232 extends along a closed trajectory. The score groove 232 includes a first groove segment 2321, a second groove segment 2322, a third groove segment 2323, and a fourth groove segment 2324, the first groove segment 2321 and the third groove segment 2323 are spaced apart along the first direction X and symmetrically arranged relative to the center point of the recess 231; and the second groove segment 2322 and the fourth groove segment 2324 are spaced apart along the second direction Y and symmetrically arranged relative to the center point of the recess 231.

The sidewall of the recess 231 includes a first sidewall 2331 located outside the first groove segment 2321, a second sidewall 2332 located outside the second groove segment 2322, a third sidewall 2333 located outside the third groove segment 2323, and a fourth sidewall 2334 located outside the fourth groove segment 2324, where the first sidewall 2331 and the third sidewall 2333 are oppositely disposed along the first direction X, and the second sidewall 2332 and the fourth sidewall 2334 are oppositely disposed along the second direction Y.

A maximum distance between the first groove segment 2321 and the first sidewall 2331 is greater than a maximum distance between the second groove segment 2322 and the second sidewall 2332 and a maximum distance between the fourth groove segment 2324 and the fourth sidewall 2334, and a maximum distance between the third groove segment 2323 and the third sidewall 2333 is greater than a maximum distance between the second groove segment 2322 and the second sidewall 2332 and a maximum distance between the fourth groove segment 2324 and the fourth sidewall 2334.

From two ends of the first groove segment 2321 toward the middle, the distance between the first groove segment 2321 and the first sidewall 2331 gradually increases; and from two ends of the third groove segment 2323 toward the middle, the distance between the third groove segment 2323 and the third sidewall 2333 gradually increases.

The first sidewall 2331 and the third sidewall 2333 are plane surfaces, and the second sidewall 2332 and the fourth sidewall 2334 are curved surfaces. The first groove segment 2321, the second groove segment 2322, the third groove segment 2323, and the fourth groove segment 2324 are all arc segments. Arc transitions are provided between the first groove segment 2321 and the second groove segment 2322, between the second groove segment 2322 and the third groove segment 2323, between the third groove segment 2323 and the fourth groove segment 2324, and between the fourth groove segment 2324 and the first groove segment 2321.

It should be noted that, in the case of no conflict, the embodiments in the present application and the features in the embodiments can be combined with each other.

The above are only preferred embodiments of the present application and are not used to limit the present application. For those skilled in the art, the present application may have various changes and modifications. Any modifications, equivalent replacements, improvements, etc. made within the spirit and principles of the present application should be included in the protection scope of the present application.

## Claims

1. A casing component, applied to a battery cell, wherein the casing component is provided with a recess, a bottom wall of the recess is provided with a score groove, in a circumferential direction of the recess, the score groove extends along a closed trajectory, the score groove comprises a first groove segment and a second groove segment, a sidewall of the recess comprises a first sidewall located outside the first groove segment and a second sidewall located outside the second groove segment, and a maximum distance between the first groove segment and the first sidewall is greater than a maximum distance between the second groove segment and the second sidewall.

2. The casing component according to claim 1, wherein from two ends of the first groove segment toward the middle, the distance between the first groove segment and the first sidewall gradually increases.

3. The casing component according to claim 1, wherein the first sidewall is a plane surface, and the second sidewall is a curved surface.

4. The casing component according to claim 1, wherein the recess further comprises a third sidewall and a fourth sidewall, wherein the third sidewall is disposed opposite to the first sidewall along a first direction, the fourth sidewall is disposed opposite to the second sidewall along a second direction, and the first direction intersects the second direction.

5. The casing component according to any one of claims 1 to 4, wherein the first direction is perpendicular to the second direction.

6. The casing component according to any one of claims 1 to 4, wherein along the first direction, a distance between the first sidewall and the third sidewall is W1, and a maximum distance between the first groove segment and the first sidewall is W2, satisfying 10% × W1 ≤ W2 ≤ 70% × W1.

7. The casing component according to any one of claims 1 to 4, wherein the score groove further comprises a third groove segment, wherein the third groove segment is spaced apart from the first groove segment along the first direction, the second groove segment connects the first groove segment and the third groove segment, and a maximum distance between the third groove segment and the third sidewall is greater than a maximum distance between the second groove segment and the second sidewall.

8. The casing component according to claim 7, wherein the first groove segment and the third groove segment are symmetrically arranged relative to the center point of the recess.

9. The casing component according to claim 7, wherein the score groove further comprises a fourth groove segment, wherein the fourth groove segment is spaced apart from the second groove segment along the second direction, the first groove segment, the second groove segment, the third groove segment, and the fourth groove segment are connected end to end to form a closed loop, and a maximum distance between the first groove segment and the first sidewall is greater than a maximum distance between the fourth groove segment and the fourth sidewall.

10. The casing component according to claim 9, wherein the second groove segment and the fourth groove segment are symmetrically arranged relative to the center point of the recess.

11. The casing component according to claim 9, wherein depths of the first groove segment, the second groove segment, and the fourth groove segment are greater than a depth of the third groove segment.

12. The casing component according to claim 7, wherein along the first direction, a distance between the first sidewall and the third sidewall is W1, a maximum distance between the first groove segment and the first sidewall is W2, and a maximum distance between the third groove segment and the third sidewall is W3, satisfying W2 + W3 < W1.

13. The casing component according to any one of claims 1 to 12, wherein the first groove segment and the second groove segment are both arc segments.

14. The casing component according to claim 13, wherein an arc transition is provided between the first groove segment and the second groove segment.

15. The casing component according to claim 13, wherein the first groove segment comprises a first sub-groove segment and a second sub-groove segment, wherein an included angle between a tangent to the first sub-groove segment and the first sidewall is α1, and an included angle between a tangent to the second sub-groove segment and the first sidewall is α2, satisfying 40° ≤ α1 ≤ 80°, 40° ≤ α2 ≤ 80°.

16. The casing component according to any one of claims 1 to 15, wherein a length of the second groove segment is L1, and a length of the score groove is L, satisfying L1 ≥ 1/4 × L.

17. The casing component according to any one of claims 1 to 16, wherein the casing component comprises a body and a pressure relief member, wherein the body is provided with a through hole, and the pressure relief member covers the through hole to form the recess.

18. A battery cell, comprising the casing component according to any one of claims 1 to 17.

19. The battery cell according to claim 18, wherein the battery cell comprises a case and an end cap, wherein the case has an opening, the end cap closes the opening, and the casing component is the end cap or the case.

20. A battery, comprising the battery cell according to claim 18 or 19.

21. An electric device, comprising the battery according to claim 20, wherein the battery is configured to provide electrical energy.
